# EUROPÄISCHE PATENTSCHRIFT

(11) **EP 3 200 326 B1**
(45) Veröffentlichungstag und Bekanntmachung des Hinweises auf die Patenterteilung: **26.05.2021**
(21) Anmeldenummer: 16205061.1
(22) Anmeldetag: 19.12.2016
(51) Int. Cl.: H02K 7/00

(54) **ANTRIEBSSTRANGMODUL FÜR EIN KRAFTFAHRZEUG**
DRIVE TRAIN MODULE FOR A MOTOR VEHICLE
MODULE DE TRANSMISSION POUR VÉHICULE AUTOMOBILE

(30) Priorität: 26.01.2016 DE 102016000835
(43) Veröffentlichungstag der Anmeldung: 02.08.2017
(73) Patentinhaber: MAN Truck & Bus SE, 80995 München (DE)
(72) Erfinder: Golka, Markus, 90402 Nürnberg (DE)
(74) Vertreter: v. Bezold & Partner Patentanwälte - PartG mbB

(56) Entgegenhaltungen:
- EP-A1- 1 669 287
- DE-A1- 3 227 810
- JP-U- H0 730 584
- US-A- 5 172 006
- US-A1- 2002 033 605
- US-A1- 2014 015 354

## Beschreibung

Die vorliegende Erfindung betrifft ein Antriebsstrangmodul für ein Kraftfahrzeug. Insbesondere sind ein Antriebsstrangmodul mit einem Schwungrad und einem Kurbelwellen-Startergenerator und ein entsprechendes Kraftfahrzeug beschrieben.

Um die erste Gemischbildung, Zündung und Verbrennung in einem Verbrennungsmotor zu ermöglichen, werden Verbrennungsmotoren durch den äußeren mechanischen Antrieb eines Starters auf eine Mindestdrehzahl gebracht. Hierzu sind aus dem Stand der Technik Antriebsstrangmodule bekannt, bei denen elektrisch betriebene Kurbelwellen-Startergeneratoren zwischen Verbrennungsmotor und Getriebe angeordnet sind.

Beispielsweise offenbart die Offenlegungsschrift DE 32 27 810 A1 eine in die Kupplung integrierte elektrische Maschine, bestehend aus einem in der Kupplungsglocke angebrachten Stator und einem Rotor in Form eines am rotierendes Kupplungsgehäuse befestigten Kurzschlusskäfigs. Eine ähnliche Vorrichtung ist auch aus der Patentanmeldung US 2002/0033605 A1 bekannt. In diesem Fall ist ein im Antriebsstrang angeordnetes Schwungrad als Rotor ausgebildet, um ein elektromotorisches Andrehen der Kurbelwelle zu ermöglichen.

Das Dokument US 2014/015354 A1 offenbart einen Generator-Motor, der einen Rotorkern und ein Schwungrad umfasst. Ein Abschlusselement in der Form einer Sensorplatte ist an einer axialen Stirnseite des Rotorkerns mittels Befestigungsschrauben fixiert, die im Rotorkern eingeführt sind.

Neben der Starter-Funktion kann die im Antriebsstrang angeordnete elektrische Maschine auch als Generator verwendet werden, um aus der Bewegungsenergie der von einem Verbrennungsmotor angetriebenen Kurbelwelle elektrische Energie zu erzeugen. Beispielsweise offenbart die EP 1 669 287 A1 eine Generatorvorrichtung mit einem Rotor in Form eines drehfest mit der Kurbelwelle verbindbaren magnetischen Bauteils. Die Stromerzeugung kann dabei wie im eben genannten Fall im Dauerbetrieb erfolgen oder wie in der US 5 172 006 A vorgesehen nur in bestimmten Fahrsituationen, um beispielsweise bei einem Bremsvorgang Energie rekuperieren, indem die vom Verbrennungsmotor entkoppelte Kurbelwelle den Kurbelwellen-Startergenerator antreibt. Indem die rekuperierte Energie beim Anfahren und Beschleunigen im Kurbelwellen-Startergenerator zur Unterstützung des Verbrennungsmotors umgesetzt wird, kann der Kraftstoffverbrauch reduziert werden. Weiterhin kann der Kurbelwellen-Startergenerator als Generatorersatz im Fahrbetrieb dienen.

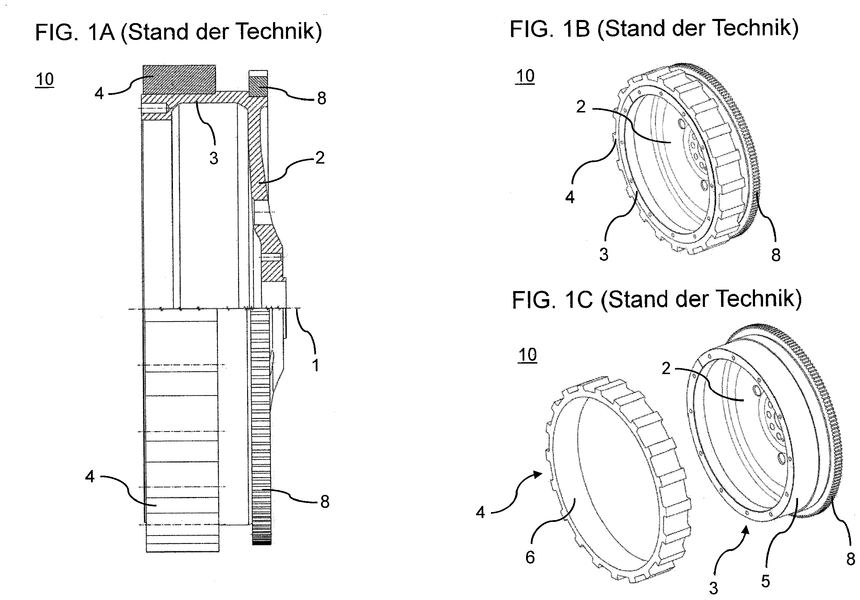

Figur 1A zeigt in der oberen Figurenhälfte einen Schnitt und in der unteren Figurenhälfte eine Ansicht eines herkömmlichen Antriebsstrangmoduls 10 für ein Kraftfahrzeug. Die Bildebene ist parallel zu einer Drehachse 1 einer Kurbelwelle. Ein solches Antriebsstrangmodul 10 ist aus der Offenlegungsschrift DE 10 2013 018 720 A1 bekannt. Das herkömmliche Antriebsstrangmodul 10 umfasst ein mit der Kurbelwelle verbundenes Schwungrad 2 und einen Rotor 4, der an einem am Schwungrad 2 angeformten Steg 3 reibschlüssig anliegt. Eine Mantelfläche des Stegs 3 bildet einen Presssitz 5, auf den eine radial innenliegenden Passung 6 des Rotors 4 gepresst ist, wie in der perspektivischen Darstellung der Figur 1B gezeigt. Deshalb muss eine axiale Länge des Stegs 3 mindestens der axialen Länge des Rotors 4 entsprechen. Die Explosionszeichnung der Figur 1C zeigt Schwungrad 3 und Rotor 4 mit freiliegendem Presssitz 5 bzw. Passung 6. Das Schwungrad 2 umfasst einen Anlasserzahnkranz 8.

Dadurch wird das Massenträgheitsmoment erhöht. Die Kraftstoffersparnis wird durch das erhöhte Massenträgheitsmoment negativ beeinflusst.

Nachteilig hieran ist, dass das Schwungrad eine zusätzliche Anbindungsfläche aufweisen muss, die mindestens die Länge des Rotors besitzt.

Somit besteht die Aufgabe, das durch den Kurbelwellen-Startergenerator verursachte Trägheitsmoment zu verringern.

Erfindungsgemäß wird ein Antriebsstrangmodul für ein Kraftfahrzeug mit den Merkmalen des Hauptanspruchs bereitgestellt. Vorteilhafte Ausführungen und Anwendungen sind Gegenstand der abhängigen Ansprüche und werden im Folgenden unter teilweiser Bezugnahme auf die Figuren näher erläutert.

Das Antriebsstrangmodul umfasst ein mit einer Kurbelwelle verbundenes oder verbindbares Schwungrad und einen Kurbelwellen-Startergenerator. Das Schwungrad weist eine Vielzahl an Befestigungsstellen auf. Der Kurbelwellen-Startergenerator umfasst einen Rotor. In einem weichmagnetisch wirksamen Bereich des Rotors ist eine Vielzahl an Durchgangsöffnungen jeweils in räumlicher Zuordnung zu den Befestigungsstellen des Schwungrads angeordnet. Durch die Durchgangsöffnungen wirken stiftförmige Befestigungselemente mit den jeweils zugeordneten Befestigungsstellen zusammen zur drehfesten Verbindung von Rotor und Schwungrad.

Ausführungsbeispiele des Antriebsstrangmoduls können durch direkte Verbindung des Schwungrads und des weichmagnetisch wirksamen Rotorbereichs das Trägheitsmoment für eine Drehung der Kurbelwelle gegenüber herkömmlichen Verbindungstechniken verringern. Der Rotor kann über das Schwungrad mit der Kurbelwelle drehfest verbunden sein. Auf eine direkte Kopplung des Rotors an die Kurbelwelle kann verzichtet werden. Der Rotor kann durch die drehfeste Verbindung zusammen mit dem Schwungrad gelagert sein. Auf eine eigene Drehlagerung des Rotors kann verzichtet werden.

Der Rotor kann ringförmig geschlossen sein. Der Rotor kann um die Drehachse der Kurbelwelle umlaufend geschlossen sein. Der Rotor kann um die Drehachse der Kurbelwelle umlaufend angeordnet sein, ohne diese zu schneiden. Eine radial innenliegende Fläche des Rotors kann von einer Kreiszylindermantelfläche abweichen. Auf eine Passung an der radial innenliegenden Fläche kann verzichtet werden.

Ferner kann das Schwungrad Durchgangsausnehmungen aufweisen. Dadurch kann das Trägheitsmoment weiter verringert werden und/oder eine weitere Funktion, beispielsweise die eines Lüfterrads oder eines Montagezugangs, erreicht werden.

Der weichmagnetisch wirksame Bereich kann ein elektrisch induzierbarer und/oder magnetodynamisch wirksamer Bereich sein. Der Rotor, beispielsweise der weichmagnetisch wirksame Bereich des Rotors, kann ein Laminat ferromagnetischer Schichten aufweisen. Das Laminat ferromagnetischer Schichten kann dazu ausgebildet sein, Wirbelströme zu unterdrücken, zumindest senkrecht zu den Schichten.

Die Durchgangsöffnungen können die Schichten durchqueren. Die Durchgangsöffnungen des Rotors können jeweils senkrecht zu einer Drehebene des Schwungrads und/oder parallel zu einer Drehachse der Kurbelwelle sein. Die Schichten können zueinander parallel sein. Die Schichten können senkrecht zur Drehachse der Kurbelwelle angeordnet sein. Die Durchgangsöffnungen können senkrecht zu den Schichten sein.

Die ferromagnetischen Schichten können weichmagnetisch sein. Die ferromagnetischen Schichten können durch nichtkornorientiertes Blech gebildet sein. Das Laminat ferromagnetischer Schichten kann durch ein Blechpaket gebildet sein. Die Schichten können voneinander elektrisch isoliert sein. Die ferromagnetischen Schichten können durch Phosphatierungsschichten an ihrer Oberfläche isoliert sein.

Alternativ oder ergänzend können die Befestigungselemente von den Schichten elektrisch isoliert sein. Durch die Isolation der Befestigungselemente können ein Kurzschluss der Schichten und/oder Wirbelströme durch benachbarte Befestigungselemente unterdrückt werden. Die Befestigungselemente können durch einen Spalt (beispielsweise einen Luftspalt) in der Durchgangsöffnung von den Schichten isoliert sein. Alternativ oder ergänzend können isolierende Hülsen (beispielsweise aus Kunststoff) in die Aussparungen eingebracht werden, die das Elektroblech vom Befestigungselement elektrisch trennen.

Die stiftförmigen Befestigungselemente können jeweils in einer der Durchgangsöffnungen angeordnet sein. An den Befestigungsstellen kann jeweils ein Innengewinde vorgesehen sein. Die Befestigungselemente können Schrauben oder Gewindebolzen umfassen. Ein Außengewinde an einem der zugeordneten Befestigungsstelle zugewandten Ende des Befestigungselements (erstes Ende) kann mit dem Innengewinde in Eingriff stehen. Ein der zugeordneten Befestigungsstelle abgewandtes Ende des Befestigungselements (zweites Ende) kann einen Schraubenkopf oder ein mit einer Mutter in Eingriff stehendes Außengewinde aufweisen. Zwischen einem Abschlusselement und dem Schraubenkopf bzw. der Mutter kann eine Tellerfeder angeordnet sein. Alternativ oder ergänzend kann das erste Ende mit dem Schwungrad und/oder das zweite Ende mit dem Rotor verschweißt sein. Alternativ oder ergänzend können die Befestigungselemente Nieten umfassen.

Die Befestigungsstellen können an Auskragungen ausgebildet sein. Das Schwungrad kann voneinander beabstandete Auskragungen aufweisen. Die Auskragungen können sich parallel zur Drehachse der Kurbelwelle erstrecken. Jede Auskragung kann jeweils eine oder mehrere Befestigungsstellen ausbilden. Beispielsweise kann an jeder Auskragung eine Anlagefläche für den Rotor vorhanden sein und/oder eine Gewindebohrung für das Innengewinde eingebracht sein. Die Auskragungen können auch als Butzen bezeichnet werden.

Ferner umfasst das Antriebsstrangmodul ein Abschlusselement, wobei das Abschlusselement zwischen dem Rotor und dem von der jeweiligen Befestigungsstelle abgewandten Ende des Befestigungselements angeordnet ist.

Das Abschlusselement umfasst voneinander getrennte Segmente, z. B. Ringsegmente. Jedes Segment des Abschlusselements ist jeweils einer Befestigungsstelle zugeordnet.

Das Abschlusselement liegt an einer vom Schwungrad abgewandten Seitenfläche des weichmagnetisch wirksamen Bereichs des Rotors flächig an. Die vom Schwungrad abgewandte Seitenfläche des Rotors kann senkrecht zur Drehachse der Kurbelwelle sein. Das Abschlusselement überdeckt die vom Schwungrad abgewandte Seitenfläche des Rotors, indem ein Profil des Abschlusselements in einer Ansicht in Richtung der Drehachse deckungsgleich mit der Seitenfläche ist.

Nach allgemeinen Gesichtspunkten der Erfindung weist das Abschlusselement maschinenlesbare (oder sensorlesbare) Markierungen auf. Die Markierungen können an einem Umfang des Abschlusselements angeordnet sein. Die Markierungen sind dazu ausgebildet, eine Drehbewegung und/oder eine Drehstellung des Abschlusselements (bzw. der damit drehfest verbundenen Kurbelwelle) zu erfassen. Die Markierungen können optisch erfassbar sein, beispielsweise durch Reflexion oder Transmission. Die Markierungen können durch Aussparungen und/oder eine umlaufende Zahnung ausgebildet sein.

Die Markierungen können eine Vielzahl an umlaufend äquidistanten Markierungen umfassen. Die Vielzahl an umlaufend äquidistanten Markierungen kann eine Erfassung von mehreren Winkelgeschwindigkeiten innerhalb einer Umdrehung ermöglichen. Alternativ oder ergänzend können zwei benachbarte Markierungen einen Abstand aufweisen, der vom Abstand anderer benachbarter Markierungen verschieden ist. Beispielsweise kann der Abstand der zwei benachbarten Markierungen doppelt so groß sein wie der Abstand zwischen jeweils allen anderen benachbarten Markierungen. Die verschiedenen Abstände benachbarter Markierungen können eine Erfassung der Drehstellung ermöglichen.

Die Befestigungsstellen können an einer zur Drehachse der Kurbelwelle senkrechten Seitenfläche des Schwungrads angeordnet sein. Die Befestigungsstellen können umlaufend, z. B. äquidistant, am Schwungrad angeordnet sein. Die Befestigungsstellen können auf einem ersten Teilkreis des Schwungrads angeordnet sein.

Die Befestigungsstellen können Anlageflächen aufweisen. Der Rotor, beispielsweise das Blechpaket, kann an den Anlageflächen anliegen. Die Anlageflächen der Vielzahl an Befestigungsstellen können in einer gemeinsamen ersten Ebene liegen. Die erste Ebene kann parallel zur Drehebene des Schwungrads und/oder senkrecht zur Drehachse der Kurbelwelle sein.

An derselben Seitenfläche und/oder einer gegenüberliegenden Seitenfläche des Schwungrads können weitere Befestigungsstellen angeordnet sein. Die Befestigungsstellen für den Rotor können von den weiteren Befestigungsstellen hinsichtlich Teilkreisradius und/oder axialer Länge verschieden sein. So können die weiteren Befestigungsstellen des Schwungrads auch bei befestigtem Rotor zugänglich sein. Beispielsweise können die weiteren Befestigungsstellen auf einem zweiten Teilkreis angeordnet sein. Der Radius des ersten Teilkreises kann vom Radius des zweiten Teilkreises verschieden sein.

Alternativ oder ergänzend können die Befestigungsstellen für den Rotor in ersten Auskragungen des Schwungrads ausgebildet sein. Die weiteren Befestigungsstellen können in zweiten Auskragungen des Schwungrads ausgebildet sein. Eine erste axiale Länge der ersten Auskragungen kann von einer zweiten axialen Länge der zweiten Auskragungen verschieden sein. Beispielsweise können die weiteren Befestigungsstellen weitere Anlageflächen aufweisen. Die weiteren Anlageflächen können in einer zweiten Ebene liegen. Die zweite Ebene kann zur ersten Ebene parallel und versetzt sein. Die axialen Längen können parallel zur Drehachse der Kurbelwelle bezüglich einer Drehebene des Schwungrads definiert sein. Die weiteren Befestigungsstellen können zur drehfesten Verbindung mit einer Kupplung oder einem Getriebe ausgebildet sein.

Ferner können im Schwungrad Aussparungen, insbesondere runde Aussparungen, vorgesehen sein. Diese verbessern die Werkzeugzugänglichkeit, um ein Getriebe verschrauben zu können.

Gemäß einem weiteren Aspekt ist ein Kraftfahrzeug, insbesondere ein Nutzfahrzeug, bereitgestellt, dessen Antriebsstrang ein Antriebsstrangmodul gemäß dem vorstehenden Aspekt in einer der Ausführungsvarianten umfasst.

Weitere Merkmale und Vorteile der Erfindung werden im Folgenden unter Bezugnahme auf die beigefügten Zeichnungen beschrieben. Es zeigen:
- Figuren 1A-1C: eine Schnittansicht und perspektivische Darstellungen eines aus dem Stand der Technik bekannten Antriebsstrangmoduls;
- Figur 2: eine Explosionszeichnung eines ersten Beispiels eines Antriebsstrangmoduls;
- Figur 3: eine perspektivische Darstellung eines Ausführungsbeispiels eines Schwungrads, das in jedes der Beispiele des Antriebsstrangmoduls einsetzbar ist;
- Figur 4: eine perspektivische Darstellung des ersten Beispiels des Antriebsstrangmoduls;
- Figur 5: einen radialen Teilschnitt des ersten Beispiels des Antriebsstrangmoduls;
- Figur 6: eine axiale Ansicht des ersten Beispiels des Antriebsstrangmoduls;
- Figur 7: eine perspektivische Darstellung eines zweiten Beispiels eines Antriebsstrangmoduls; und
- Figur 8: einen radialen Schnitt eines Ausführungsbeispiels einer Antriebsstrangkomponente.

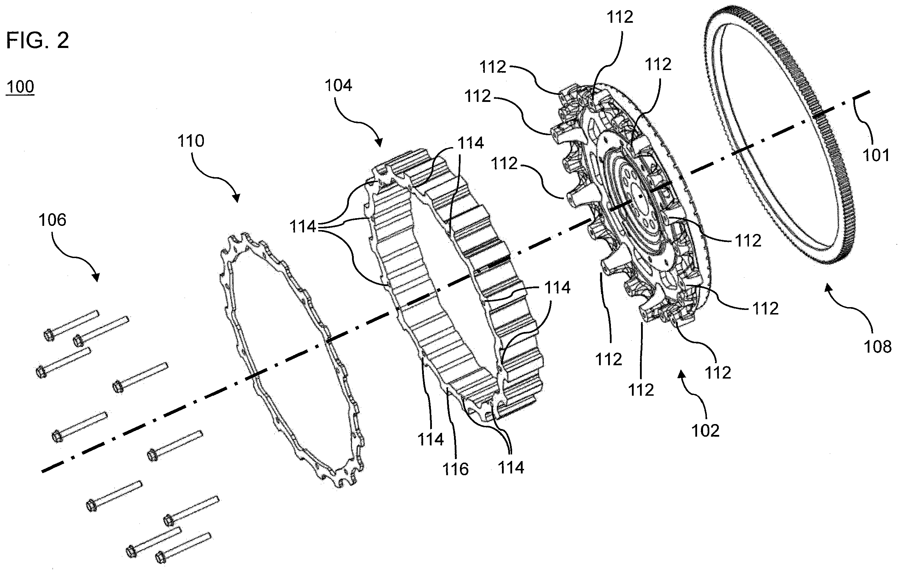

Figur 2 ist eine Explosionsdarstellung eines Beispiels eines allgemein mit Bezugszeichen 100 bezeichneten Antriebstrangmoduls für ein Kraftfahrzeug. Das Modul 100 umfasst ein Schwungrad 102 und einen Rotor 104 für einen Kurbelwellen-Startergenerator.

Das Schwungrad 102 des Antriebstrangmoduls 100 ist mit einer Kurbelwelle verbindbar. Eine Drehachse der Kurbelwelle ist mit Bezugszeichen 101 bezeichnet. Das Schwungrad 102 weist eine Vielzahl an Befestigungsstellen 112 auf.

In einem weichmagnetisch wirksamen Bereich eines Rotors 104 des Kurbelwellen-Startergenerators sind in räumlicher Zuordnung zu den Befestigungsstellen 112 Durchgangsöffnungen 114 vorgesehen. In den Durchgangsöffnungen 114 sind Befestigungselemente 106 angeordnet. Die Befestigungselemente 106 sind jeweils an einem der zugeordneten Verbindungsstelle 112 zugewandten ersten Ende mit dem Schwungrad 102 verbunden. An einem vom Schwungrad 102 abgewandten zweiten Ende übertragen die stiftförmigen Befestigungselemente 106 eine axiale Zugspannung auf eine vom Schwungrad 102 abgewandte Seitenfläche 116 des Rotors 104. Die Zugspannung hält den Rotor 104 in Anlage mit dem Schwungrad 102, wodurch der Rotor 104 drehfest mit dem Schwungrad 102 verbunden ist.

Die drehfeste Verbindung kann durch einen Kraftschluss aufgrund der Zugspannung der Befestigungselemente 106 erreicht werden. Alternativ oder ergänzend können die im Schwungrad 102 verankerten stiftförmigen Befestigungselemente 106 formschlüssig in den Durchgangsöffnungen 114 angeordnet sein, beispielsweise durch Verklemmen der stiftförmigen Verbindungselemente 106 in den Durchgangsöffnungen 114.

Das durch einen Steg 3 und eine Passung 6 bei der herkömmlichen Verbindungstechnik verursachte Trägheitsmoment entfällt. Zudem können Ausführungsbeispiele so ausgelegt sein, dass eine zusätzliche Masse der Befestigungselemente 106 nahezu gleich der Massenreduktion am Rotor 104 aufgrund der Durchgangsöffnungen 114 ist. Mit anderen Worten: Die drehfeste Verbindung kann nahezu ohne einen Beitrag zum Trägheitsmoment ausgeführt werden.

Optional umfasst das Antriebsstrangmodul 100 einen Zahnkranz 108, in den das Ritzel eines Einrück-Starters eingreift. Der Einrück-Starter wird vorzugsweise für den Kaltstart des Verbrennungsmotors eingesetzt, während eine Start-Stopp-Automatik am Ende einer Standphase des Kraftfahrzeugs den Kurbelwellen-Startergenerator einsetzt. Dadurch kann der Kurbelwellen-Startergenerator ausschließlich mit einem Kurzzeitspeicher verbunden sein, beispielsweise zur Speisung der Start-Stopp-Automatik und/oder zur Speisung des Bordnetzes bei ausgeschaltetem Motor, mit aus Bremsvorgängen rekuperierter und im Kurzzeitspeicher gespeicherter Energie. Ohne den aus einem Langzeitspeicher (beispielsweise einem Bleiackumulator) gespeisten Einrück-Starter müsste der Kurzzeitspeicher für den Kaltstart aus dem Langzeitspeicher vorgeladen werden. Zudem kann, da eine mechanische Leistungsanforderung für den Kaltstart höher ist als für die Start-Stopp-Automatik, der Kurbelwellen-Startergenerator durch den zusätzlichen Einrück-Starter für eine geringere mechanische Leistung ausgelegt werden. Dadurch kann ebenfalls das durch den Kurbelwellen-Startergenerator verursachte Trägheitsmoment verringert werden.

Erfindungsgemäß umfasst das Antriebsstrangmodul 100 getriebeseitig ein Abschlusselement 110. Das Abschlusselement 110 ist zwischen dem vom Schwungrad 102 abgewandten zweiten Ende der Befestigungselemente 106 und dem Rotor 104 angeordnet. Die zweiten Enden der Befestigungselemente 106 liegen am Abschlusselement 110 an und übertragen die Zugspannung auf das Abschlusselement 110. Eine Wandungsdicke und/oder eine Härte des Abschlusselements 110 ist so bestimmt, dass die punktuelle Kraftübertragung der Befestigungselemente 106 als gleichmäßiger Anpressdruck auf die vom Schwungrad 102 abgewandte Seitenfläche 116 des Rotors 104 verteilt wird.

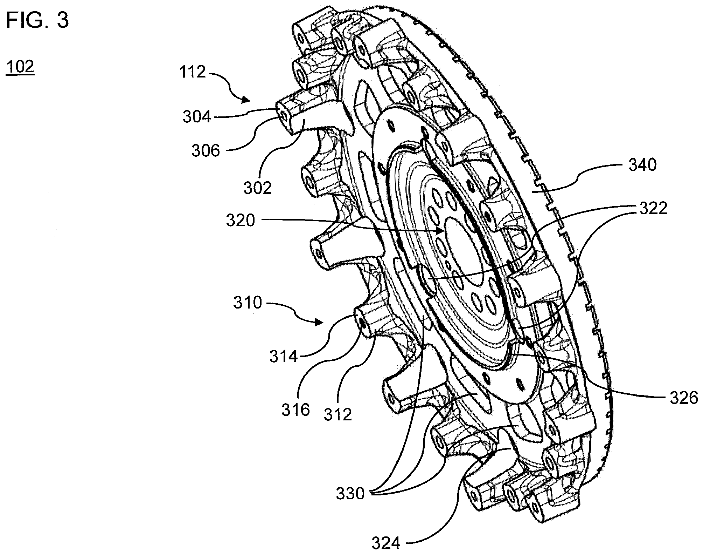

Figur 3 ist eine perspektivische Darstellung eines Ausführungsbeispiels des Schwungrads 102. Jede der Befestigungsstellen 112 ist jeweils an einer Auskragung 302 ausgebildet, die sich parallel zur Drehachse 101 vom Schwungrad 102 erstreckt. Die Auskragung 302 schließt mit einer zur Drehachse 101 senkrechten Anlagefläche 304 ab. In der Anlagefläche 304 ist eine zur Drehachse 101 parallele Gewindebohrung mit einem Innengewinde 306 eingebracht.

Durch die Auskragungen 302 kann der Rotor 104 vom Schwungrad 102 hinreichend beabstandet angeordnet sein, um mit einem Stator zusammenzuwirken. Das Trägheitsmoment durch die umlaufende Masse eines herkömmlichen Stegs 3 ist durch die an den Verbindungsstellen 112 lokalisierte Masse der Auskragungen 302 reduziert.

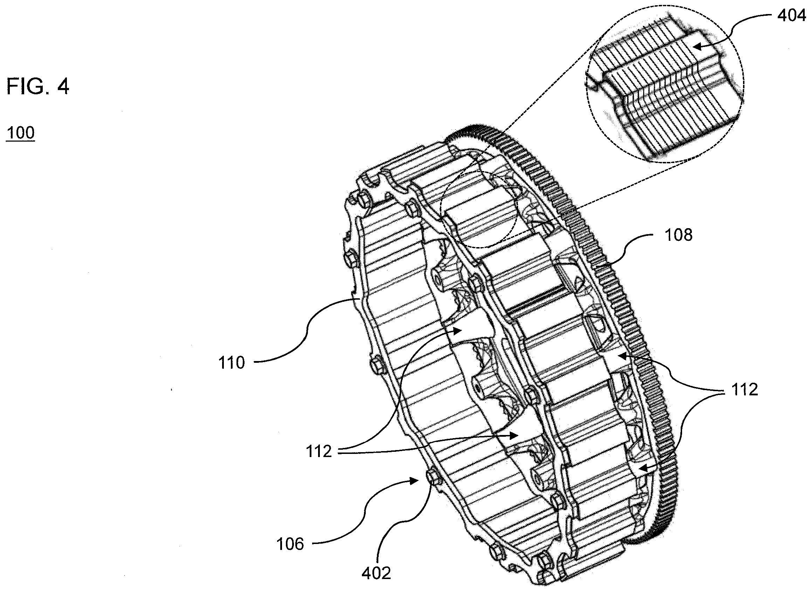

Figur 4 zeigt eine perspektivische Darstellung des ersten Beispiels des mittels der Befestigungselemente 106 mit dem Schwungrad 102 verbundenen Rotors 104. Im in Figur 4 gezeigten Ausführungsbeispiel dienen Schrauben als Befestigungselemente 106, jeweils mit einem Schraubenkopf 402 am vom Schwungrad 102 abgewandten zweiten Ende der Befestigungselemente 106. Ein Anziehmoment der Schrauben bestimmt deren Zugspannung und somit den Anpressdruck.

Vorzugsweise ist zumindest der weichmagnetisch wirksame Bereich des Rotors 104, beispielsweise der gesamte mit Bezugszeichen 104 bezeichnete umlaufende Rotor, aus ferromagnetischen Schichten 404 aufgebaut, die zur Unterdrückung von Wirbelstromverlusten durch nichtleitende Zwischenschichten voneinander elektrisch isoliert sind. In einem Ausführungsbeispiel sind die ferromagnetischen Schichten 404 durch die Zwischenschichten adhäsiv verbunden zu einem Laminat ferromagnetischer Schichten 404. Ein Beispiel für das Laminat ferromagnetischer Schichten 404 ist ein Blechpaket, dessen weichmagnetische Schichten aus Dynamoblech gefertigt sind. In einem alternativen Ausführungsbeispiel sind die Schichten 404 nicht durch die Zwischenschichten verbunden und werden durch die Zugspannung der Befestigungselemente 106 kraftschlüssig verbunden.

Der aus ferromagnetischen Schichten 404 aufgebaute Rotor 104 ist vorteilhafterweise unter Verwendung des Abschlusselements 110 mit dem Schwungrad 102 verbunden. Durch den gleichmäßigen Anpressdruck des Abschlusselements 110 wird ein Aufbiegen der kraftschlüssig verbundenen Schichten 404 oder ein Aufbrechen der adhäsiv verbunden Schichten 404 zwischen benachbarten Befestigungselementen 106 verhindert, beispielsweise nachdem die Schrauben angezogen sind. In einem zur Erfindung nicht gehörenden Vergleichsbeispiel können die Schichten 404 oder zumindest eine erste der Schichten 404 mit einer hinreichenden Wandstärke und/oder die Verbindung der Schichten 404 mit hinreichender Festigkeit ausgeführt sein, so dass auf das Abschlusselement 110 verzichtet werden kann.

Die einzelnen ferromagnetischen Schichten 404 des Rotors 104 können durch Stanzen aus Blechrollen herausgetrennt werden. Durch die direkte Verbindung von Schwungrad 102 und Rotor 104 entsteht kein Mehraufwand bei der Herstellung der Schichten 404 des Rotors 104, da die zusätzlichen Löcher in den einzelnen Schichten (zur Bildung der Durchgangsöffnungen 114) im selben Stanzvorgang eingefügt werden können. Dadurch, dass keine Passung 6 an der radial innenliegenden Fläche des Rotors 104 notwendig ist, vereinfacht sich die Herstellung des Rotors 104 im Vergleich zum herkömmlichen Rotor 4. Beispielsweise können, da die Passung 6 entfällt, Toleranzen bei der Herstellung der Schichten 404 aufgeweitet werden. Dadurch entsteht weniger Materialausschuss. Weiterhin kann ein Stanzwerkzeug für mehr Stanzvorgänge verwendet werden, bis es aufgrund von Verschleiß gewechselt werden muss.

Durch Entfall des herkömmlichen Stegs 3 können weitere Verbesserungen erreicht werden. Beispielsweise ist eine größere Fläche des Schwungrads 102 getriebeseitig als Verbindungsschnittstelle für weitere Bauteile zugänglich, beispielsweise für einen Getriebeadapter. Zusätzlich zu den Befestigungsstellen 112 für den Rotor 104 weist das in Figur 3 gezeigte Ausführungsbeispiel des Schwungrads 102 weitere Befestigungsstellen 310 auf. Jede der weiteren Befestigungsstellen 310 ist durch eine separate weitere Auskragung 312 gebildet, die mit einer zur Drehachse 101 senkrechten weiteren Anlagefläche 314 abschließt. In der weiteren Anlagefläche 314 ist eine zur Drehachse 101 parallele Gewindebohrung mit einem weiteren Innengewinde 316 eingebracht.

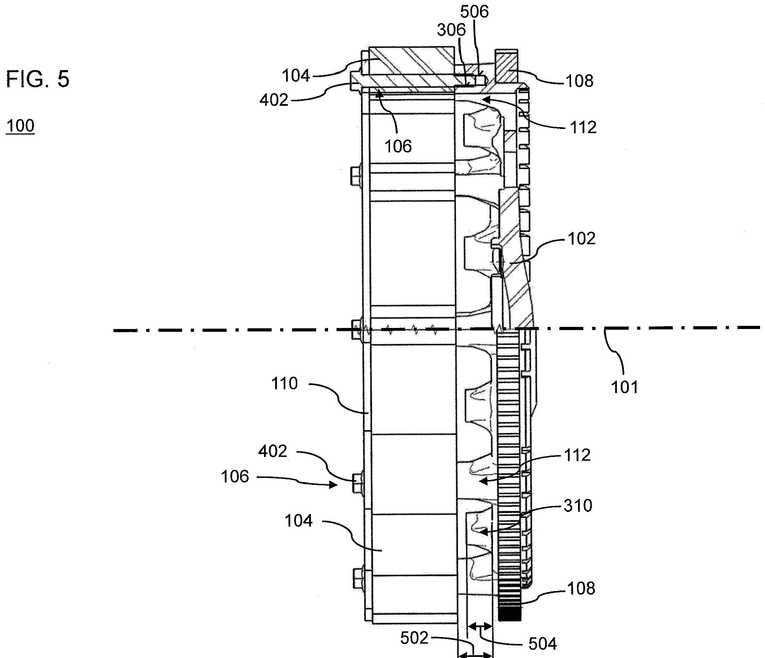

Figur 5 zeigt in der oberen Figurenhälfte einen zur Drehachse 101 parallelen radialen Teilschnitt des ersten Beispiels des Antriebsstrangmoduls 100. Die entsprechende Ansicht des Antriebsstrangmoduls 100 ist in der unteren Figurenhälfte gezeigt. Eine erste axiale Länge 502 der Auskragungen 302 für den Rotor 104 ist größer als eine zweite axiale Länge 504 der weiteren Auskragungen 312. Dadurch liegt die durch die weiteren Befestigungsstellen 310 gebildete Verbindungsschnittstelle in einer eigenen Ebene zwischen dem Schwungrad 102 und dem Rotor 104.

Für eine kompakte Bauform einer Antriebsstranganordnung mit einem Getriebe und dem Antriebsstrangmodul 100 ist der mit den weiteren Befestigungsstellen 310 verbundene Getriebeadapter des Getriebes vollständig im Innenraum des Rotors 104 angeordnet.

Ein Außengewinde 506 am der Verbindungsstelle 112 zugewandten ersten Ende des Befestigungselementes 106 greift in das Innengewinde 306 ein. Ein Schraubenkopf 402 am der Verbindungsstelle 112 abgewandten zweiten Ende des Befestigungselementes 106 liegt am Abschlusselement 110 an. Vorzugsweise ist jeweils zwischen Schraubenkopf 402 und Abschlusselement 110 eine Tellerfeder am Befestigungselement 106 angeordnet, um den Anpressdruck weiter zu erhöhen.

Alternativ oder ergänzend zur axialen Länge unterscheiden sich die durch die weiteren Befestigungsstellen 310 gebildeten Verbindungsschnittstellen von der Verbindungsschnittstelle für den Rotor 104 hinsichtlich eines Teilkreisdurchmessers der Befestigungsstellen 112 und der weiteren Befestigungsstellen 310.

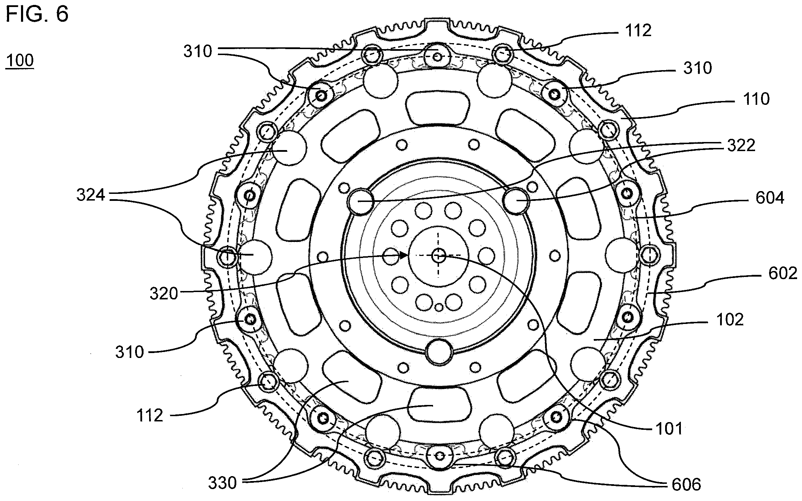

Figur 6 zeigt eine getriebeseitige Ansicht des Antriebsstrangmoduls 100. Die Bildebene der Figur 6 ist senkrecht zur Drehachse 101 der Kurbelwelle. Die Befestigungsstellen 112 sind auf einem ersten Teilkreis 602 äquidistant angeordnet. Die weiteren Befestigungsstellen 310 sind auf einem zweiten Teilkreis 604 äquidistant angeordnet. Ein erster Teilkreisdurchmesser des ersten Teilkreises 602 ist größer als ein zweiter Teilkreisdurchmesser des zweiten Teilkreises 604.

Ein Profil des Abschlusselements 110 in der Ansicht in Richtung der Drehachse 101 ist erfindungsgemäß deckungsgleich der Seitenfläche 116, d. h. mit einem Profil des Rotors 104 in der getriebeseitigen Ansicht in Richtung der Drehachse 101. Dadurch kann der gleichmäßige Anpressdruck mit minimalem Masseneinsatz erreicht werden.

Die Befestigungsstellen 112 und die weiteren Befestigungsstellen 310 sind vorzugsweise umlaufend abwechselnd angeordnet, so dass zwischen zwei benachbarten Befestigungsstellen 112 je eine weitere Befestigungsstelle 310 angeordnet ist. Das Profil des Rotors 104 und des Abschlusselements 110 weicht an den weiteren Befestigungsstellen 310 von einer Kreislinie ab zur Bildung von Aussparungen 606. Durch die Aussparungen 606 sind die weiteren Anlageflächen 314 der weiteren Befestigungsstellen 310 getriebeseitig zugänglich.

Die Kurbelwelle ist an einer in den Figuren 3 und 5 gezeigten Nabe 320 mit dem Schwungrad 102 verschraubbar. Runde Durchgangsausnehmungen 322 und 324 im Schwungrad 102 sind auf Teilkreisen außerhalb der Nabe 320 eingebracht und dienen zur Werkzeugzugänglichkeit, beispielsweise um ein Getriebe mit dem Schwungrad 102 zu verschrauben. Zudem tragen die Durchgangsausnehmungen 322 und 324 zur weiteren Verringerung des Trägheitsmoments bei. Optional weist das Schwungrad 102 weitere Durchgangsausnehmungen 330 zur Verringerung des Trägheitsmoments auf.

Eine umlaufende oder im Wesentlichen umlaufende Fläche 326 steht am Schwungrad 102 in axialer Richtung hervor. Die Fläche 326 ermöglicht das Zentrieren eines am Schwungrad befestigten Bauteils, beispielsweise eines Getriebeadapters.

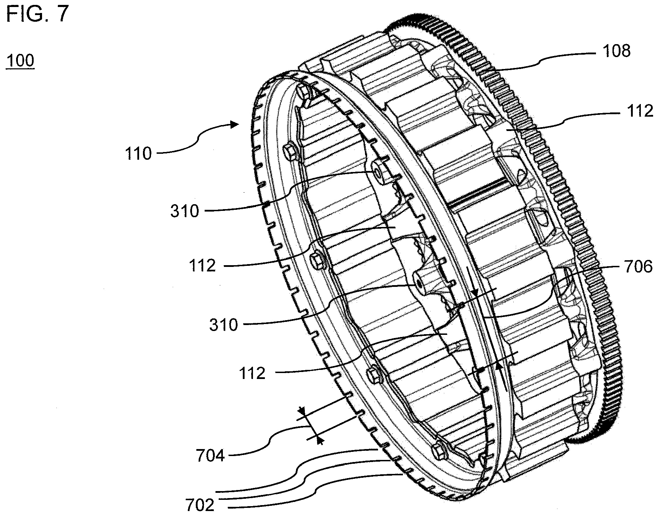

Der Zahnkranz 108 ist auf einem in Figur 3 gezeigten Presssitz 340 reibschlüssig befestigt. Figur 7 zeigt ein weiteres Beispiel des Antriebsstrangmoduls 100. Entsprechende Merkmale sind mit gleichen Bezugszeichen bezeichnet. Deren Beschreibung und optionale Ausgestaltung im Zusammenhang mit dem ersten Ausführungsbeispiel gelten entsprechend für das zweite Ausführungsbeispiel.

Am Abschlusselement 110 sind an einem umlaufenden Kranz Markierungen 702 angebracht, die von einem Drehzahlgeber berührungslos erfasst werden. Im in Figur 7 gezeigten Ausführungsbeispiel sind die Markierungen Aussparungen in einer Zylinderwandung. Der Drehzahlmesser umfasst eine Gabellichtschranke, deren radialer Lichtverlauf durch die Zylinderwandung unterbrochen wird.

Die Markierungen 702 kodieren sowohl Drehzahl als auch Drehstellung des Abschlusselements 110 (und aller damit drehfest verbundenen Bauteile des Antriebstrangmoduls 100). Dazu sind benachbarte Markierungen 702 in einem einheitlichen ersten Umfangsabstand 704 angeordnet. Nur ein Paar benachbarter Markierungen 702 ist in einem vom ersten Umfangsabstand 704 abweichenden zweiten Umfangsabstand 706 angeordnet. Im in Figur 7 gezeigten Ausführungsbeispiel ist der zweite Umfangsabstand 706 mindestens doppelt so groß wie der erste Umfangsabstand 704. Vorteilhafterweise ist der zweite Umfangsabstand 706 kein ganzzahliges Vielfaches des ersten Umfangsabstands 704, so dass das Auftreten des zweiten Umfangsabstands 706 von einem fehlerhaft ausbleibenden Signal unterschieden werden kann.

Aufgrund der Vielzahl an Markierungen 702 mit dem ersten Umfangsabstand 704 kann die Drehzahl (oder Winkelgeschwindigkeit) mit einer zeitlichen Auflösung erfasst werden, die ein Bruchteil einer Umdrehungsperiode ist. Aufgrund des einen Markierungspaars mit dem zweiten Umfangsabstand 706 kann die Drehstellung beim Auftreten einer dem zweiten Umfangsabstand 706 entsprechend längeren Signalfolge eindeutig bestimmt werden.

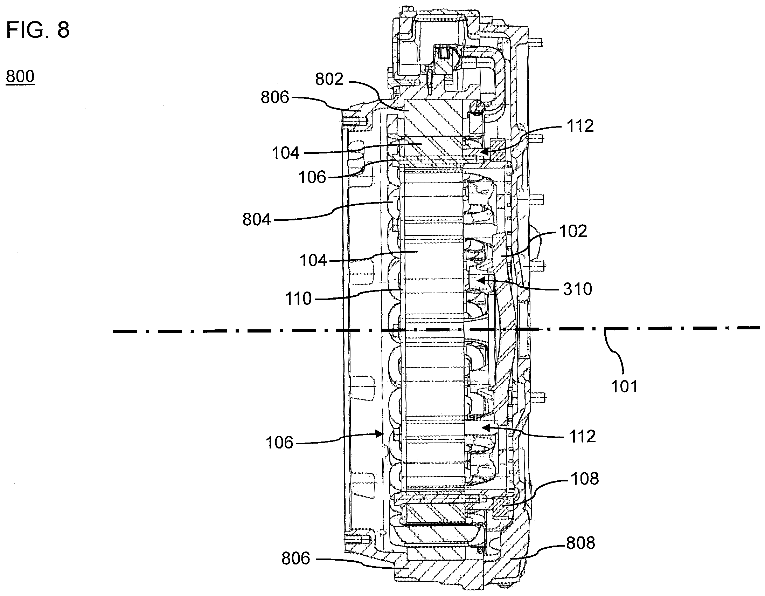

Figur 8 zeigt einen zur Drehachse 101 parallelen Schnitt einer Antriebsstrangkomponente 800. Die Antriebsstrangkomponente 800 umfasst das rotierende Antriebsstrangmodul 100. Das rotierende Antriebsstrangmodul 100 und ein Stator 802 sind in einem Gehäuse angeordnet. Statorspulen 804 des Stators 802 sind außerhalb des Rotors 104 um diesen umlaufend angeordnet. Das Gehäuse umfasst einen Statorgehäuseteil 806 und einen Schwungradgehäuseteil 808.

Im Generatorbetrieb induziert der Rotor 104 eine Spannung in den Statorspulen 804. Ein von der Spannung getriebener Strom lädt einen Kurzzeitspeicher. Im Starterbetrieb speist der Kurzzeitspeicher einen Strom in den Statorspulen 804, dessen Magnetfeld den weichmagnetisch wirksamen Bereich des Rotors 104 magnetisiert und ein Drehmoment erzeugt.

Während vorstehende Ausführungsbeispiele ein ringförmig geschlossenes Abschlusselement 110 einsetzen und sich daher durch diese Ausführung des Abschlusselements von der beanspruchten Erfindung unterscheiden, ist erfindungsgemäß vorgesehen, dass das Abschlusselement 110, beispielsweise zur weiteren Massenreduktion, mehrstückig ausgeführt ist.

Wie anhand vorstehender Ausführungsbeispiele verdeutlicht, können Gewicht und Trägheitsmoment verringert werden. Eine maschinelle Bearbeitung des Schwungrads kann dadurch vereinfacht werden, da eine Presssitzfläche entfällt.

Verschiedene Ausführungsformen des Abschlusselements ermöglichen, zusätzliche Funktionalitäten zu integrieren. Weitere Schnittstellen können am Schwungrad, insbesondere im Bereich der Anbindung des Rotors, integriert werden, beispielsweise für eine kompakte Bauform.

Die Herstellung des Rotors kann vereinfacht werden, da die Passung entfällt.

Obwohl die Erfindung in Bezug auf exemplarische Ausführungsbeispiel beschrieben worden ist, ist es für einen Fachmann ersichtlich, dass verschiedene Änderungen vorgenommen werden können und Äquivalente als Ersatz verwendet werden können. Ferner können viele Modifikationen vorgenommen werden, um eine bestimmte Situation oder ein bestimmtes Material an die Lehre der Erfindung anzupassen. Folglich ist die Erfindung nicht auf die offenbarten Ausführungsbeispiele beschränkt, sondern umfasst alle Ausführungsbeispiele, die in den Bereich der beigefügten Patentansprüche fallen.

### Bezugszeichenliste

- 1, 101: Drehachse der Kurbelwelle
- 2, 102: Schwungrad
- 3: Steg
- 4, 104: Rotor
- 5: Presssitz für Rotor
- 6: Passung
- 106: Befestigungselemente
- 8, 108: Zahnkranz
- 110: Abschlusselement
- 112: Befestigungsstelle
- 114: Durchgangsöffnung
- 302: Auskragung
- 304: Anlagefläche
- 306: Innengewinde
- 310: Weitere Befestigungsstelle
- 312: Weitere Auskragung
- 314: Weitere Anlagefläche
- 316: Weiteres Innengewinde
- 320: Nabe zur Kurbelwellenverbindung
- 322, 324: Durchgangsausnehmungen für Werkzeug
- 326: Fläche zur Zentrierung
- 330: Durchgangsausnehmungen zur Massenreduktion
- 340: Presssitz für Zahnkranz
- 402: Schraubenkopf
- 404: Laminat ferromagnetischer Schichten
- 502: Erste axiale Länge
- 504: Zweite axiale Länge
- 506: Außengewinde
- 602: Erster Teilkreis
- 604: Zweiter Teilkreis
- 606: Aussparungen für weitere Befestigungsstelle und/oder Werkzeugzugänglichkeit
- 702: Markierungen zur Dreherfassung
- 704: Erster Markierungsabstand
- 706: Zweiter Markierungsabstand
- 800: Antriebsstrangkomponente
- 802: Stator
- 804: Statorspulen
- 806: Statorgehäuse
- 808: Schwungradgehäuse

## Patentansprüche

1. Antriebsstrangmodul (100) für ein Kraftfahrzeug, umfassend:
- ein mit einer Kurbelwelle verbundenes oder verbindbares Schwungrad (102), das eine Vielzahl an Befestigungsstellen (112) aufweist und um eine Drehachse (101) drehbar ist; und
- einen Kurbelwellen-Startergenerator, der einen Rotor (104) aufweist, wobei in einem weichmagnetisch wirksamen Bereich des Rotors (104) eine Vielzahl an Durchgangsöffnungen (114) jeweils in räumlicher Zuordnung zu den Befestigungsstellen (112) des Schwungrads (102) angeordnet ist, durch welche stiftförmige Befestigungselemente (106) mit den jeweils zugeordneten Befestigungsstellen (112) zusammenwirken zur drehfesten Verbindung von Rotor (104) und Schwungrad (102); und
- ein Abschlusselement (110), das zwischen dem Rotor (104) und einem von der jeweiligen Befestigungsstelle abgewandten Ende (402) des Befestigungselements (106) angeordnet ist, wobei
das Abschlusselement (110) an einer vom Schwungrad (102) abgewandten Seitenfläche (116) des weichmagnetisch wirksamen Bereichs des Rotors (104) flächig anliegt, **dadurch gekennzeichnet, dass**
ein Profil des Abschlusselements (110) in einer Ansicht in Richtung der Drehachse (101) deckungsgleich mit der Seitenfläche (116) ist, und
das Abschlusselement (110) voneinander getrennte Segmente umfasst, die jeweils einer Befestigungsstelle (112) zugeordnet sind.

2. Antriebsstrangmodul nach Anspruch 1, wobei zumindest der weichmagnetisch wirksame Bereich des Rotors (104) ein Laminat ferromagnetischer Schichten (404) aufweist und die Durchgangsöffnungen (114) die Schichten (404) durchqueren.

3. Antriebsstrangmodul nach Anspruch 2, wobei das Laminat ferromagnetischer Schichten (404) durch ein Blechpaket gebildet ist.

4. Antriebsstrangmodul nach Anspruch 2 oder 3, wobei die Schichten (404) voneinander elektrisch isoliert sind und die Befestigungselemente (106) von den Schichten (404) elektrisch isoliert sind.

5. Antriebsstrangmodul nach einem der Ansprüche 1 bis 4, wobei die Befestigungsstellen (112) jeweils ein Innengewinde (306) aufweisen und die Befestigungselemente (106) in den Durchgangsöffnungen (114) angeordnete Schrauben umfassen, die in das Innengewinde (306) der zugeordneten Befestigungsstellen (112) eingreifen.

6. Antriebsstrangmodul nach einem der Ansprüche 1 bis 5, wobei das Schwungrad (102) voneinander beabstandete Auskragungen (302) aufweist, in denen jeweils mindestens eine Befestigungsstelle (112) ausgebildet ist.

7. Antriebsstrangmodul nach einem der vorherigen Ansprüche, wobei das von der Befestigungsstelle (112) abgewandte Ende (402) des jeweiligen Befestigungselements (106) einen Schraubenkopf aufweist und zwischen dem Schraubenkopf und dem Abschlusselement (110) eine Tellerfeder angeordnet ist.

8. Antriebsstrangmodul nach einem der vorherigen Ansprüche, wobei das Abschlusselement (110) umlaufende Markierungen (702) zur Erfassung einer Drehbewegung und/oder einer Drehstellung aufweist.

9. Antriebsstrangmodul nach einem der vorherigen Ansprüche, wobei die Befestigungsstellen (112) auf dem Schwungrad (102) umlaufend angeordnet sind.

10. Antriebsstrangmodul nach einem der vorherigen Ansprüche, wobei die Befestigungsstellen (112) auf einem ersten Teilkreis (602) des Schwungrads (102) angeordnet sind.

11. Antriebsstrangmodul nach Anspruch 10, wobei das Schwungrad (102) weitere Befestigungsstellen (310) auf einem zweiten Teilkreis (604) aufweist und der Radius des ersten Teilkreises (602) vom Radius des zweiten Teilkreises (604) verschieden ist.

## Claims

1. A drivetrain module (100) for a motor vehicle, comprising:
- a flywheel (102) which is connected or connectable to a crankshaft and which has a multiplicity of fastening points (112) and is rotatable about an axis of rotation (101); and
- a crankshaft starter-generator which has a rotor (104), wherein, in a region of magnetically soft action of the rotor (104), a multiplicity of passage openings (114) is arranged in each case so as to be spatially assigned to the fastening points (112) of the flywheel (102), through which passage openings pin-like fastening elements (106) interact with the respectively assigned fastening points (112) for the purposes of rotationally conjointly connecting the rotor (104) and flywheel (102); and
- a closure element (110) which is arranged between the rotor (104) and an end (402), which is averted from the respective fastening point, of the fastening element (106), wherein the closure element (110) bears areally against a side surface (116), averted from the flywheel (102), of the region of magnetically soft action of the rotor (104),
**characterized in that**
a profile of the closure element (110) in a view in the direction of the axis of rotation (101) is congruent with the side surface (116), and
the closure element (110) comprises mutually separate segments which are assigned to in each case one fastening point (112).

2. The drivetrain module according to Claim 1, wherein at least the region of magnetically soft action of the rotor (104) has a laminate of ferromagnetic layers (404), and the passage openings (114) extend through the layers (404).

3. The drivetrain module according to Claim 2, wherein the laminate of ferromagnetic layers (404) is formed by a sheet bundle.

4. The drivetrain module according to Claim 2 or 3, wherein the layers (404) are electrically insulated with respect to one another and the fastening elements (106) are electrically insulated with respect to the layers (404).

5. The drivetrain module according to any of Claims 1 to 4, wherein the fastening points (112) have in each case an internal thread (306), and the fastening elements (106) comprise screws which are arranged in the passage openings (114) and which engage into the internal thread (306) of the associated fastening points (112).

6. The drivetrain module according to any of Claims 1 to 5, wherein the flywheel (102) has mutually spaced-apart projections (302) in which in each case at least one fastening point (112) is formed.

7. The drivetrain module according to any of the preceding claims, wherein that end (402) of the respective fastening element (106) which is averted from the fastening point (112) has a screw head, and a disc spring is arranged between the screw head and the closure element (110).

8. The drivetrain module according to any of the preceding claims, wherein the closure element (110) has encircling markings (702) for the detection of a rotational movement and/or of a rotational position.

9. The drivetrain module according to any of the preceding claims, wherein the fastening points (112) are arranged in encircling fashion on the flywheel (102) .

10. The drivetrain module according to any of the preceding claims, wherein the fastening points (112) are arranged on a first pitch circle (602) of the flywheel (102).

11. The drivetrain module according to Claim 10, wherein the flywheel (102) has further fastening points (310) on a second pitch circle (604) and the radius of the first pitch circle (602) differs from the radius of the second pitch circle (604).

## Revendications

1. Module de chaîne cinématique (100) pour un véhicule automobile, comprenant :
- un volant (102), relié ou pouvant être relié à un vilebrequin, qui présente une pluralité de points de fixation (112) et peut tourner autour d'un axe de rotation (101) ; et
- un générateur de démarrage de vilebrequin qui présente un rotor (104), dans lequel, dans une zone à effet magnétique doux du rotor (104), une pluralité d'ouvertures de passage (114) sont disposées respectivement suivant une attribution spatiale aux points de fixation (112) du volant (102), à travers lesquelles des éléments de fixation (106) en forme de tiges coopèrent avec les points de fixation (112) respectivement attribués en vue de la liaison solidaire en rotation du rotor (104) et du volant (102) ; et
- un élément terminal (110) qui est disposé entre le rotor (104) et une extrémité (402), détournée du point de fixation respectif, de l'élément de fixation (106), l'élément terminal (110) étant appliqué à plat contre une surface latérale (116), détournée du volant (102), de la zone à effet magnétique doux du rotor (104),
**caractérisé en ce que** dans une vue en direction de l'axe de rotation (101), un profil de l'élément terminal (110) est coïncident avec la surface latérale (116), et l'élément terminal (110) comprend des segments séparés les uns des autres qui sont attribués à un point de fixation (112) respectivement.

2. Module de chaîne cinématique selon la revendication 1, dans lequel au moins la zone à effet magnétique doux du rotor (104) présente un stratifié de couches ferromagnétiques (404) et les ouvertures de passage (114) traversent les couches (404).

3. Module de chaîne cinématique selon la revendication 2, dans lequel le stratifié de couches ferromagnétiques (404) est formé par un empilage de tôles.

4. Module de chaîne cinématique selon la revendication 2 ou 3, dans lequel les couches (404) sont isolées électriquement les unes par rapport aux autres, et les éléments de fixation (106) sont isolés électriquement par rapport aux couches (404).

5. Module de chaîne cinématique selon l'une quelconque des revendications 1 à 4, dans lequel les points de fixation (112) présentent respectivement un taraudage (306) et les éléments de fixation (106) comprennent des vis disposées dans les ouvertures de passage (114) qui viennent en prise avec le taraudage (306) des points de fixation attribués (112).

6. Module de chaîne cinématique selon l'une quelconque des revendications 1 à 5, dans lequel le volant (102) présente des saillies (302) espacées les unes des autres dans lesquelles respectivement au moins un point de fixation (112) est réalisé.

7. Module de chaîne cinématique selon l'une quelconque des revendications précédentes, dans lequel l'extrémité (402), détournée du point de fixation (112), de l'élément de fixation (106) respectif présente une tête de vis, et un ressort à disques est disposé entre la tête de vis et l'élément terminal (110) .

8. Module de chaîne cinématique selon l'une quelconque des revendications précédentes, dans lequel l'élément terminal (110) présente des repères périphériques (702) pour la détection d'un mouvement de rotation et/ou d'une position de rotation.

9. Module de chaîne cinématique selon l'une quelconque des revendications précédentes, dans lequel les points de fixation (112) sur le volant (102) sont disposés de manière périphérique.

10. Module de chaîne cinématique selon l'une quelconque des revendications précédentes, dans lequel les points de fixation (112) sont disposés sur un premier cercle primitif (602) du volant (102).

11. Module de chaîne cinématique selon la revendication 10, dans lequel le volant (102) présente des points de fixation (310) supplémentaires sur un deuxième cercle primitif (604), et le rayon du premier cercle primitif (602) est différent du rayon du deuxième cercle primitif (604).
